# EUROPEAN PATENT APPLICATION

(11) **EP 3 957 400 A1**
(43) Date of publication of application: **23.02.2022**
(21) Application number: 20191401.7
(22) Date of filing: 17.08.2020
(51) Int. Cl.: B05B 7/00

(54) **NOZZLE FOR SPRAYING CONCRETE OR SIMILAR MATERIAL, PORTIONS OF THE SAME AND STRUCTURE MANUFACTURING APPARATUS USING THE SAME**

(71) Applicant: Mobbot SA, 1700 Fribourg (CH)
(72) Inventor: RIBEAUD, Thomas, 1700 Fribourg (CH); GALÉ, Benjamin, 1700 Fribourg (CH); PETIT, Agnès, 1700 Fribourg (CH)
(74) Representative: KATZAROV S.A.

(57) **Abstract**

The present relates to a material inlet portion (1) of a spraying nozzle (100) for bringing materials in said spraying nozzle comprising a first inlet (11) adapted to bring a first material in the spraying nozzle and defining a first portion (31) of a main channel (3) in a flow direction, and at least one second inlet (12) adapted to bring a gas/air material in the spraying nozzle and defining a secondary channel (4) branching into said main channel (3) and presenting an outlet (13) for outputting the air/gas material centrally with respect to the main channel (3) such that the air/gas material is to be surrounded by the first material upon exiting the outlet (13).

## Description

### Technical Field

The present invention relates to a nozzle for an apparatus for spraying concrete or similar material or a mix thereof. More particularly, it relates to portions of a nozzle for an apparatus for spraying a mix of concrete and air presenting an improved air-concrete mixing capacity.

### Background of the art

Additive manufacturing of concrete exists since the 80'. There are four types of additives manufacturing of concrete, the contour crafting method which is the most widely used method, the smart dynamic casting, mesh mold techniques and the conventional high speed sprayed concrete.

For many years now, the high speed spayed concrete has shown multiple advantages over the other methods. More particularly, the sprayed concrete is a single term that describes various components of a technology: shotcrete as material, a placing process and as a construction method. Shotcrete exists since 1914 and has been permanently adapted. The applications of shotcrete are wide and include originally soil stabilization. It is used to stabilize excavation in tunneling, and underground construction, mines, concrete repair and historic buildings, protective lining, sealing works, or construction of pool. The underground construction and mine being the top applications. There are two different sprayed concrete process, the dry and wet spraying and designates the type of material which is fed to the point where excess pressure of material is fed in a nozzle and sprayed. The concrete is sprayed on natural surfaces. The resulting sprayed concrete surface is uneven.

In the last couple of years sprayed concrete has started to be used for additive manufacturing. In document US 2015/059408 A1, the concrete is sprayed in the excavation on a reinforcement placed vertically. The main drawback is that with this apparatus and this method, the lateral surfaces of the resulting manufactured concrete elements have a rough surface and a completely irregular shape from one layer to the other one and even within the same layer thereby providing a completely irregular surface. Because of this, additional steps are required for smoothening the concrete surface using a tool to cut the surface or smoothen the surface and the designed structure therefore causing a waste of time and money

In this regard, new types of apparatus for manufacturing 3-dimensional concrete structures have been invented. These apparatuses comprise a projection head for spraying concrete material, wherein the projection head comprises a projection nozzle for spraying the concrete material and at least two guide plates provided on both sides of the projection nozzle and defining a volume between them, such that the projection nozzle is adapted to spray the concrete material into the volume defined between the plates, and wherein the projection head is repeatedly moved along a predefined path by a control means and is configured to adjust the position of the two guide plates during the movement of the nozzle so as to create a 3-dimensional concrete structure made of a plurality of projected concrete layers. Thanks to it the invention provides a method and an apparatus providing an improved concrete structure for strength performance and durability features and permits to build 3-dimensional structure with passive reinforcement and at a higher speed.

These new apparatuses have however shown that the existing commercial nozzles are no longer sufficiently performing because they do not provide a proper mixing of the concrete, the air and the possible additives within it, generate much waste called rebound. In fact, in sprayed concrete, the nozzle act as a spraying component but also as a mixing element where the air, the concrete and the possible additives arrive through respective paths (hoses) and are mixed before being sprayed.

For example, a projection nozzle is described in WO 03/369898, this projection nozzle is made so as to break up a dense concrete mixture thanks to a branch pipe to which a feed line is attached. This nozzle has however several drawbacks such as the loss of pneumatic energy due to the arrival of the air in a direction perpendicular to the flow. This results in a worse mixture and lower particle speed at the output.

Finally in the EP 1570908A1, the subject matter of the patent is a reduction in wear of the nozzle due to the fact that the frictional force is kept constant over the entire nozzle by means of an alpha angle. The patent refers to a shape with an inlet, a restriction section and an outlet which is calculated to keep the frictional forces constant in this acceleration zone. This patent is based solely on the narrowing of sections to accelerate a concrete following a certain angle alpha. However, the formulas taken into account; considers an incompressible flow and therefore that there is no friction in the cylindrical outlet zone 3. However, a nozzle for sprayed concrete is under high pressure such that the pressure at the entrance is higher than at the nozzle outlet. This assumption to consider a compressible fluid the hydrodynamics is not correct in patent EP 1570908A1.

In view of the above, there is no nozzle solving the problem of improving the mixing and increasing the spraying velocity and reducing the waste.

In this regard, a primary object of the invention is to solve the above-mentioned problems and more particularly to provide a nozzle permitting a proper mixing for improving the spraying velocity, improving the concrete performance such as its homogeneity, its resistance to compression/traction, its rebound and the same. By improving the velocity one decreases the amount of chemical (activator) need to set the concrete.

Another object of the invention is to provide a nozzle providing a spray which is straighter in order to reduce the collateral loss.

### Summary of the invention

The above problems are solved by the present invention.

The inventors have found that the geometry of the nozzle can be modified and adapted to impact several concrete physical parameters such as the spraying velocity, the concrete spraying angle, improving the concrete performance such as its homogeneity, its resistance to compression/traction, its rebound and the same.

A first aspect of the invention is therefore a new nozzle permitting to increase the concrete's spraying velocity, increase the concrete's homogeneity, enhance the concrete's resistance to compression/traction, narrow the concrete's spraying angle, reduce the energy consumption of the concrete's spraying process and the chemical needed to activate the concrete and the same.

The first aspect of the invention relates to a material inlet portion of a spraying nozzle for bringing materials in said spraying nozzle comprising a first inlet adapted to bring a first material in the spraying nozzle and defining a first portion of a main channel in a flow direction, and at least one second inlet adapted to bring a gas/air material in the spraying nozzle and defining a secondary channel branching into said main channel and presenting an outlet for outputting the air/gas material centrally with respect to the main channel such that the air/gas material is to be surrounded by the first material upon exiting the outlet. Thanks to this nozzle arrangement, the concrete's spraying angle is narrowed, the concrete's spraying velocity is increased and the concrete's homogeneity is improved.

Advantageously, the secondary channel branches in the main channel so as to provide an angle between 0° and 5° between its outlet axis and the axis of the main channel, preferably 0° Thus, the energy consumption of the concrete's spraying process is reduced.

Preferably, the air injection section is lower is the minimum section of the complete pneumatic circuit bringing the air in the system. Therefore, the air reaches its maximum speed in this section, which can reduce the concrete into small particles.

According to a preferred embodiment, the secondary channel has a substantially banana form so as to inject the air/gas material parallel to the flow direction. So as to reduce the air losses compared to a 90° angle elbow.

Preferably, the first material is at least one of concrete, soil, painting, metal, polymeric insulating or sealing material, roughcast or the same.

Advantageously, the secondary channel further comprises a second inlet for receiving an activator so as to mix the activator with the air/gas material within the secondary channel before being outputted by the outlet.

A second aspect of the invention relates to a material outlet portion of a spraying nozzle for bringing materials out of a spraying nozzle comprising an elongated tubular-shaped portion presenting an outlet and an inlet between which is defined a second portion of the main channel in a flow direction.

Advantageously, the outlet presents an elliptic shape. Thus the spray can be focused on a specific location so as to better control the spraying zone.

Preferably, the elongated tubular-shaped portion presents at least a first inner diameter and a second inner diameter smaller than the first inner diameter wherein the portion having the first inner diameter is placed upstream the portion with the second inner diameter along the flow direction. Thus, the outlet pressure is increased.

According to a preferred embodiment, the inner diameter of the elongated tubular-shaped portion first diminishes from the inlet to the outlet thereby presenting a minimum diameter portion in between and then raises again so as to present a Laval inner shape.

A third aspect of the invention relates to a spraying nozzle comprising the material inlet portion of the first aspect of the invention and the material outlet portion of the second aspect of the invention being detachably attached so as to provide a mixing portion along the flow direction.

Preferably, the mixing portion is provided downstream the outlet of the secondary channel.

Advantageously, the material outlet portion is disposable.

A fourth aspect of the invention relates to an apparatus for fabrication of 3-dimensional objects with concrete material presenting a projection head comprising the spraying nozzle of the third aspect of the invention.

### Brief description of the drawings

Further particular advantages and features of the invention will become more apparent from the following non-limitative description of at least one embodiment of the invention which will refer to the accompanying drawings, wherein
- Figure 1 schematically represents a material inlet portion of a spraying nozzle according to the present invention,
- Figure 2 schematically represents a material outlet portion of a spraying nozzle according to a first embodiment of the present invention,
- Figure 3 schematically represents a material outlet portion of a spraying nozzle according to a second embodiment of the present invention,
- Figure 4 schematically represents a material outlet portion of a spraying nozzle according to third embodiment of the present invention,
- Figure 5 schematically represents of a projection nozzle comprising a material inlet portion and a material outlet portion according to the present invention.

### Detailed description of the invention

The present detailed description is intended to illustrate the invention in a non-limitative manner since any feature of an embodiment may be combined with any other feature of a different embodiment in an advantageous manner.

The present invention relates to an apparatus for fabrication of 3-dimensional objects, a spraying nozzle adapted to be used in this apparatus and material inlet and outlet portions forming said nozzle. The materials which can be used with these devices are preferably chosen in the group comprising is at least one of concrete, soil, painting, metal, polymeric sealing, insulating and waterproofing material, roughcast or the same.

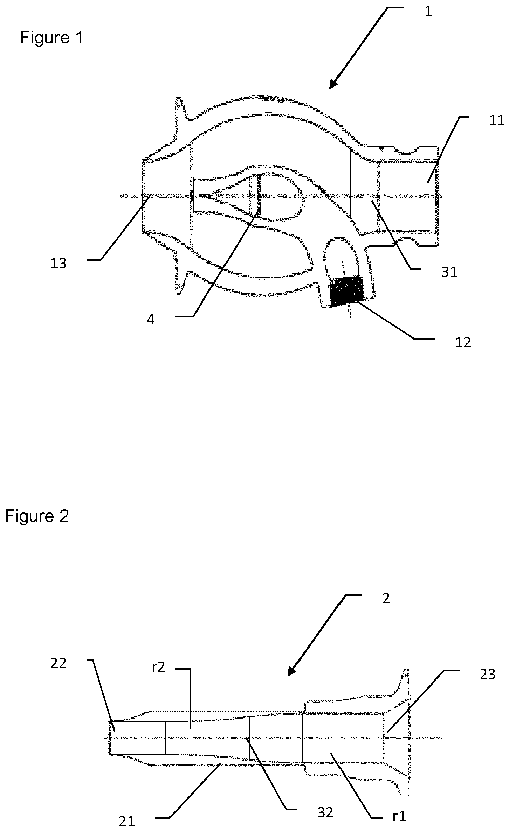

Figure 1 represents a first embodiment of a material inlet portion 1 of the spraying nozzle 100 for bringing materials in the spraying nozzle from a delivery tool (not represented) such as a hose or the same. It comprises a first inlet 11 adapted to bring a first material in the spraying nozzle and defining a first portion 31 of a main channel 3 in a flow direction, and at least one second inlet 12 adapted to bring a gas/air material in the spraying nozzle and defining a secondary channel 4, preferably having a substantially banana form so as to inject the air/gas material parallel to the flow direction, branching into said main channel 3 and presenting an outlet 13 for outputting the air/gas material centrally with respect to the main channel 3 such that the air/gas material is to be surrounded by the first material upon exiting the outlet 13. With this arrangement, the concrete's spraying angle is narrowed, the concrete's spraying velocity is increased and the concrete's homogeneity is improved.

Although not explicitly represented in figure 1, the secondary channel 4 preferably branches in the main channel 3 so as to provide an angle of 5° or less between its outlet axis and the axis of the main channel, in order to reduce the energy consumption of the concrete's spraying process.

One can see in figure 1, that the air injection section 12 is lower is the minimum section of the complete pneumatic circuit bringing the air in the system such that the air reaches its maximum speed in this section, which can breakdown the concrete into small particles.

According to another embodiment, the secondary channel 4 can further comprise a second inlet for receiving an activator so as to mix the activator with the air/gas material within the secondary channel before being outputted by the outlet 13. In addition, the material inlet portion may further comprise at least one of an air sleeve and one or more additional air entrance.

Figure 2 shows a first embodiment of a material outlet portion 2 of a spraying nozzle 100 for bringing materials out of a spraying nozzle comprising an elongated tubular-shaped portion 21 presenting an outlet 22 and an inlet 23 between which is defined a second portion 32 of the main channel 3 in a flow direction. As we can see, the elongated tubular-shaped portion 21 presents at least a first diameter r1 and a second diameter r2 smaller than the first diameter wherein the portion having the first diameter is placed upstream the portion with the second diameter along the flow direction.

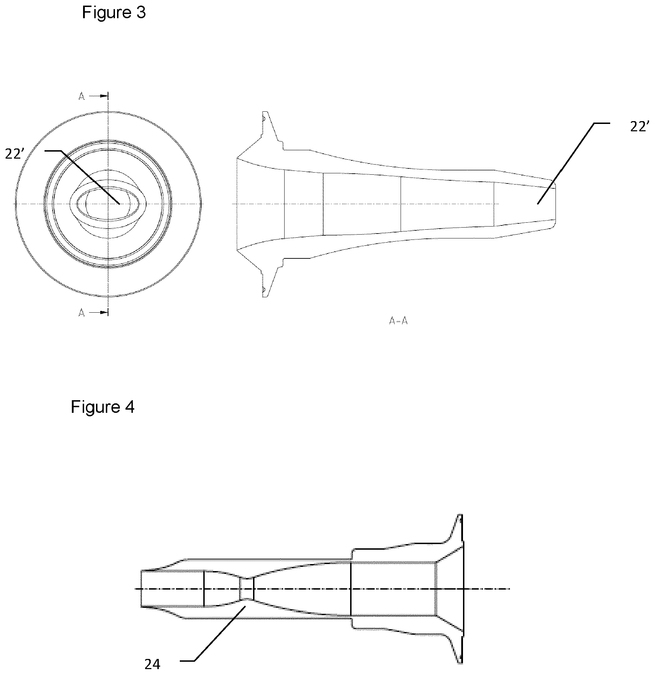

Figure 3 shows a third embodiment of the material outlet portion where the outlet 22 presents an elliptic shape.

Figure 4 shows a third embodiment of the material outlet portion where the inner diameter of the elongated tubular-shaped portion 21 first diminishes from the inlet 23 to the outlet 22 thereby presenting a minimum diameter portion 24 in between and then raises again so as to present a Laval inner shape.

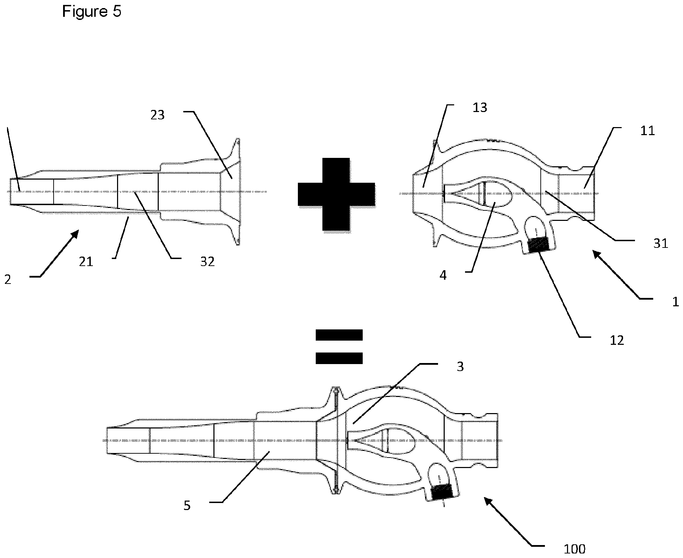

Finally, figure 5 shows an embodiment of the spraying nozzle 100 comprising the material inlet portion and the material outlet portion according described above and being detachably attached so as to provide a mixing portion 5 along the flow direction. As is represented, the mixing portion 5 is provided downstream the outlet 13 of the secondary channel 4. It has to be note that the material outlet portion 2 can be designed in a disposable material so as to be disposable.

An apparatus for the fabrication of 3-dimensional objects with concrete material presenting a projection head comprising the spraying nozzle shown above is also covered by the present patent but is not represented in the figures.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This is for example particularly the case regarding the different concretes or additives which can be used, or the different parameters chosen to optimize the projection of the concrete material such as the concrete flow rate, the air flow, the air pressure or the rheology of the concrete.

## Claims

1. Material inlet portion (1) of a spraying nozzle (100) for bringing materials in said spraying nozzle comprising
a first inlet (11) adapted to bring a first material in the spraying nozzle and defining a first portion (31) of a main channel (3) in a flow direction, and
at least one second inlet (12) adapted to bring a gas/air material in the spraying nozzle and defining a secondary channel (4) branching into said main channel (3) and presenting an outlet (13) for outputting the air/gas material centrally with respect to the main channel (3) such that the air/gas material is to be surrounded by the first material upon exiting the outlet (13).

2. Material inlet portion of a spraying nozzle according to claim 1, **characterized in that** the secondary channel (4) branches in the main channel (3) so as to provide an angle of 5° or less between its outlet axis and the axis of the main channel.

3. Material inlet portion of a spraying nozzle according to any one of claims 1 or 2, **characterized in that** the air injection section (12) is lower is the minimum section of the complete pneumatic circuit bringing the air in the system. The air reaches its maximum speed in this section, which can reduce the concrete into small particles.

4. Material inlet portion of a spraying nozzle according to any one of claims 1 or 3, **characterized in that** the secondary channel (4) has a substantially banana form so as to inject the air/gas material parallel to the flow direction.

5. Material inlet portion of a spraying nozzle according to any one of claims 1 to 4, **characterized in that** the first material is at least one of concrete, soil, painting, metal, polymeric sealing, insulating and waterproofing material, roughcast or the same.

6. Material inlet portion of a spraying nozzle according to any one of claims 1 to 5, **characterized in that** said secondary channel (4) further comprises a second inlet for receiving an activator so as to mix the activator with the air/gas material within the secondary channel before being outputted by the outlet (13).

7. Material inlet portion of a spraying nozzle according to any one of claims 1 to 6, **characterized in that** it further comprises at least one of an air sleeve and one or more additional air entrance.

8. Material outlet portion (2) of a spraying nozzle (100) for bringing materials out of a spraying nozzle comprising an elongated tubular-shaped portion (21) presenting an outlet (22) and an inlet (23) between which is defined a second portion (32) of the main channel (3) in a flow direction.

9. Material outlet portion of a spraying nozzle according to claim 8, **characterized in that** the outlet (22) presents an elliptic shape.

10. Material outlet portion of a spraying nozzle according to claim 8 or 9, **characterized in that** the elongated tubular-shaped portion (21) presents at least a first diameter (r1) and a second diameter (r2) smaller than the first diameter wherein the portion having the first diameter is placed upstream the portion with the second diameter along the flow direction.

11. Material outlet portion of a spraying nozzle according to claim 10, **characterized in that** the inner diameter of the elongated tubular-shaped portion (21) first diminishes from the inlet (23) to the outlet (22) thereby presenting a minimum diameter portion (24) in between and then raises again so as to present a Laval inner shape.

12. Spraying nozzle (100) comprising the material inlet portion according to any one of claims 1 to 8 and the material outlet portion according to any one of claims 9 to 13 being detachably attached so as to provide a mixing portion (5) along the flow direction.

13. Spraying nozzle according to claim 12, **characterized in that** the mixing portion (5) is provided downstream the outlet (13) of the secondary channel (4).

14. Spraying nozzle according to claim 13, **characterized in that** it the material outlet portion (2) is disposable.

15. Apparatus for fabrication of 3-dimensional objects with concrete material presenting a projection head comprising the spraying nozzle of any one of claims 12 to 14.
